# EUROPEAN PATENT APPLICATION

(11) **EP 4 212 678 A1**
(43) Date of publication of application: **19.07.2023**
(21) Application number: 21847671.1
(22) Date of filing: 08.09.2021
(51) Int. Cl.: E03F 5/04, E03C 1/28

(54) **DRAIN TRAP HAVING STRUCTURE THAT BLOCKS TRANSMISSION OF PATHOGENS BETWEEN FLOORS**

(30) Priority: 09.09.2020 KR 20200115162; 14.04.2021 KR 20210048348
(71) Applicant: Yang, Jeong Seok, Ansan-si, Gyeonggi-do 15398 (KR)
(72) Inventor: Yang, Jeong Seok, Ansan-si, Gyeonggi-do 15398 (KR)
(74) Representative: dompatent von Kreisler Selting Werner - Partnerschaft von Patent- und Rechtsanwälten mbB
(86) International application number: PCT/KR2021/012206
(87) International publication number: WO 2022/055246

(57) **Abstract**

Disclosed herein is a structural drain trap for preventing spread of pathogens between floors, which has an improved structure in which it includes a cover and an outer chamber that are easily coupled to and decoupled from each other and provides a drain line configured to have a double structure at inner and outer portions thereof. Therefore, it is possible to prevent pathogens such as Coronavirus as well as odors or pests from flowing backward as much as possible, and thus to prevent pathogens from spreading through the gap between the floors of buildings such as apartments.

## Description

### [Technical Field]

The present invention relates to a drain trap, and more particularly, to a structural drain trap for preventing spread of pathogens between floors, which has an improved structure in which the drain trap includes a cover and an outer chamber coupled to and decoupled from each other through a one-step method, and provides a drain line configured to have an outer double structure and an inner double structure for expansion to retain water in two areas, thereby significantly ensuring the ability to prevent pathogens as well as odors or pests from flowing backward.

### [Background Art]

P-type and S-type drain traps, which prevent odors from flowing backward using water that is stagnant in the S-type and P-type curved pipes of the drain traps, are generally known.

A drain trap technology having such a backflow prevention function is disclosed in Korean Patent No. 10-1050739 (registered on July 14, 2011, and hereinafter referred to as "Document 1"), titled "DRAIN TRAP FOR PREVENTING ODORS".

Document 1 discloses a drain trap for preventing odors, which has a sponge ground tissue (SGT) filter to offset the flow rate of a fluid falling through a drain pipe, and a flow rate guide distribution plate formed integrally with an expansion guide having guide protrusions formed radially on the upper surface thereof to rotate and guide the fluid falling through the SGT filter toward the inner wall of the drain pipe. The drain trap includes an upper housing installed at the lower end of the connection of the drain pipe, wherein the upper housing is coupled to the upper portion of a lower housing, and has a first coupling groove formed on the upper surface thereof for insertion of the bottom of the drain pipe thereinto and an inlet formed to introduce an external fluid therethrough to drain the external fluid away, and the lower housing installed at the upper end of the connection of the drain pipe, wherein the lower housing has a second coupling groove formed on the bottom surface thereof for insertion of the top of the drain pipe thereinto, accommodates the SGT filter and flow rate guide distribution plate therein, and has a sieve for filtering out foreign substances contained in the fluid introduced through the inlet and a transfer passage for allowing the fluid having passed through the sieve to be transferred toward the upper surface of the SGT filter, and the upper housing further has a cover installed to cover the inlet. The drain trap is simply installed between building drain pipes, and has a double structure that simultaneously accommodates wastewater falling through the drain pipe and wastewater or running water introduced into the drain pipe from the outside through the connection of the drain pipe. Accordingly, the drain trap prevents the backflow of wastewater and easily drains the wastewater while preventing the inflow of odors and pests from the drain pipe.

Another technology is disclosed in Korean Patent No. 10-1316846 (registered on October 2, 2013, and hereinafter referred to as "Document 2"), titled "BATHROOM DRAIN TRAP".

Document 2 discloses a bathroom drain trap including: a housing provided with a collection member, in which wastewater supplied from the bottom surfaces of a bathtub, a washbasin, and a bathroom is collected in a collection space, partitioned by a valve in the form of corrugation to accommodate the radius of rotation of a positioning member coupled to the coupling hole of a support member, and then overflows to be drained into a drain hole, and the support member configured to close the collection member, the positioning member being rotatably mounted to the support member; the positioning member rotatably mounted in the coupling hole formed in the support member of the housing and positioned to be aligned with a tile; a foreign substance filter member seated in the installation space of the positioning member so that the lower end thereof is submerged in the collection space, to filter out foreign substances contained in the wastewater; and a cover seated on the positioning member to guide movement of wastewater while protecting the foreign substance filter member. Accordingly, the bathroom drain trap is usable stably by preventing the backflow of wastewater and has improved reliability to satisfy users.

A further technology is disclosed in Korean Patent No. 10-1277772 (registered on June 17, 2013, and hereinafter referred to as "Document 3"), titled "WASHSTAND DRAIN TRAP".

Document 3 discloses a washstand drain trap including: a drain guide pipe having a thread formed on the outer peripheral surface of the upper connection thereof having a through-hole through which a drain pipe passes so that the drain guide pipe is connected to a washbasin, wherein the drain guide pipe has a space therein and has a coupling thread formed on the lower inner peripheral surface of the inclined body thereof to form a certain angle of inclination; and a drain storage pipe having a thread formed on the outer peripheral surface of the insertion connection thereof inserted into the drain guide pipe so that the thread is screwed to the coupling thread, wherein the drain storage pipe is formed integrally with a leakage prevention urging part having a length extending from the thread and pressed by the inclined body. Accordingly, the washstand drain trap prevents leakage without installing an O-ring by pressing the leakage prevention part of the drain storage pipe having the extended length by the inner inclined pressing surface of the drain connection pipe when the drain connection pipe and the drain storage pipe are coupled to the drain pipe coupled to the bottom of the washbasin.

The above Documents 1 to 3 each disclose the drain trap installed in the sink or the washbasin, as described above. However, when the drain trap is not used for a long time, the backflow prevention function thereof is disabled as the stagnant water therein evaporates, which may cause the inflow and spread of viruses such as Coronavirus.

### [Disclosure]

### [Technical Problem]

Therefore, the present invention has been made in view of the above problems, and it is an object of the present invention to provide a structural drain trap for preventing spread of pathogens between floors, which is capable of having an improved structure in which a cover and an outer chamber are coupled to each other through a one-step method to facilitate detachment thereof, and providing a drain line configured to have an outer double structure and an inner double structure for expansion to accumulate water in two zones for prevention of backflow, thereby significantly ensuring the ability to prevent pathogens as well as odors or pests from flowing backward, and delaying the evaporation time of stagnant water.

It is another object of the present invention to provide a structural drain trap for preventing spread of pathogens between floors, which includes a scrubber moving up and down by the pressure of water drained thereinto and a buoyancy element, thereby enabling sterilizing detergent and water supplied thereto to be effectively mixed and chemically reacted with each other as well as effectively removing foreign substances adsorbed on inner and outer walls of a drain line.

It is a further object of the present invention to provide a structural drain trap for preventing spread of pathogens between floors, which includes a sterilization washing module configured to move down by the pressure of water drained thereinto for supply of sterilizing detergent through an open outlet, thereby sterilizing stagnant water for prevention of backflow as well as the drained water and washing a drain line.

### [Technical Solution]

In accordance with an aspect of the present invention, the above and other objects can be accomplished by the provision of a structural drain trap for preventing spread of pathogens between floors, which includes:
a cover including a hollow cylindrical top body connected to a drain pipe of a drain hole, and a hollow hemispherical bottom body extending downward around a lower end of the top body;
a cylindrical outer chamber disposed beneath the bottom body of the cover, and having an internal space that is open upward;
a hollow cylindrical inner chamber disposed to pass through a bottom center area of the space of the outer chamber, the inner chamber having an upper inlet, which is disposed in the space and is spaced along an inner wall of the space to define a first annular interspace, and a lower outlet exposed to the outside;
a cylindrical middle chamber having a lower end, which is disposed around the first interspace to partition an upper-side first interspace when the first interspace is divided into upper and lower halves, and an upper end, which is disposed in an upper center area of the space of the outer chamber by two or more middle relay rods connected to an upper end of the outer chamber, the middle chamber having an inner accommodation part that is open downward;
a holding means including two or more holders arranged at equal intervals around a lower end of the bottom body of the cover while rotating vertically, each having a hook at its end, and a stepped part formed around an upper outer wall of the outer chamber so that the hook of each holder rotated downward is latched by the stepped part, the holding means allowing the cover and the outer chamber to be coupled to and decoupled from each other; and
an annular watertight member disposed on a contact surface between the bottom body of the cover and the outer chamber.

### [Advantageous Effects]

A structural drain trap for preventing spread of pathogens between floors according to the present invention includes a cover and an outer chamber that are easily coupled to and decoupled from each other. Therefore, it is possible to prevent pathogens such as Coronavirus as well as odors or pests from flowing backward as much as possible, and thus to prevent pathogens from spreading through the gap between the floors of buildings such as apartments.

### [Description of Drawings]

The above and other objects, features and other advantages of the present invention will be more clearly understood from the following detailed description taken in conjunction with the accompanying drawings, in which:
FIG. 1 is an exploded perspective view illustrating a structural drain trap for preventing spread of pathogens between floors according to an embodiment of the present invention;
FIG. 2 is an exploded cross-sectional view of FIG. 1;
FIG. 3 is a combined cross-sectional view of FIG. 2;
FIG. 4 is a cross-sectional view illustrating a state in which the drain trap of the present invention is installed in a drain pipe of a drain hole;
FIG. 5 is a partially enlarged cross-sectional view schematically illustrating a sub-inner chamber and a sub-middle chamber;
FIG. 6 is a partially enlarged cross-sectional view schematically illustrating an outer guide and an inner guide;
FIG. 7 is a partially enlarged cross-sectional view schematically illustrating a scrubber and a sterilization washing module;
FIG. 8 is a perspective view illustrating the scrubber;
FIG. 9 is a partially enlarged cross-sectional view illustrating a process of operation of a switching member of the scrubber;
FIG. 10 is a perspective view illustrating a structural drain trap for preventing spread of pathogens between floors according to another embodiment of the present invention;
FIG. 11 is an exploded perspective view illustrating the structural drain trap for preventing spread of pathogens between floors according to another embodiment of the present invention;
FIG. 12 is a cross-sectional view illustrating the structural drain trap for preventing spread of pathogens between floors according to another embodiment of the present invention; and
FIG. 13 is an exploded cross-sectional view illustrating the structural drain trap for preventing spread of pathogens between floors according to another embodiment of the present invention.

### [Description of Reference Numerals]

| | |
|---|---|
| 1: drain hole | 2: drain pipe |
| 3: final drain pipe | |
| 10 (10'): cover | |
| 11: top body | |
| 12: bottom body | |
| 13: drain pipe fitting groove | |
| 14: chamber seating part | |
| 15: fastening groove | |
| 20 (20'): outer chamber | |
| 21: space | |
| 22: corresponding concave groove | |
| 23: seating base | |
| 24: permeable hole | |
| 30 (30'): inner chamber | |
| 33: seating base | |
| 34: coupling protrusion | |
| 40: middle chamber | |
| 41: middle relay rod | |
| 42: accommodation part | |
| 43: stopper | |
| 50: sub-inner chamber | |
| 51: flange | |
| 60: sub-middle chamber | |
| 61: sub-middle relay rod | |
| 62: circulation part | |
| 70: holding means | |
| 71: holder | |
| 72: stepped part | |
| 80: watertight member | |
| 90A: outer guide | |
| 90B: inner guide | |
| 100: scrubber | |
| 101: housing | |
| 102: joint | |
| 103: circular ring | |
| 104: outer brush | |
| 105: recess | |
| 106: inner brush | |
| 107: buoyant element | |
| 108: fixing element | |
| 200: sterilization washing module | |
| 201: central hole | |
| 202: enclosure | |
| 203: switching member | |
| S1: first interspace | |
| S2: second interspace | |

### [Best Mode]

Hereinafter, exemplary embodiments of the present invention will be described in detail with reference to the accompanying drawings.

Prior to the description, it is noted that the terms or words used in the specification and claims should not be construed as being limited to common or dictionary meanings but instead should be understood to have meanings and concepts in agreement with the spirit of the present invention based on the principle that an inventor can define the concept of each term suitably in order to describe his/her own invention in the best way possible. Accordingly, since the embodiments described in the specification and the configurations illustrated in the drawings are only an example of the present invention and they do not cover all the technical ideas of the invention, it should be understood that various changes and modifications may be made at the time of filing the present application.

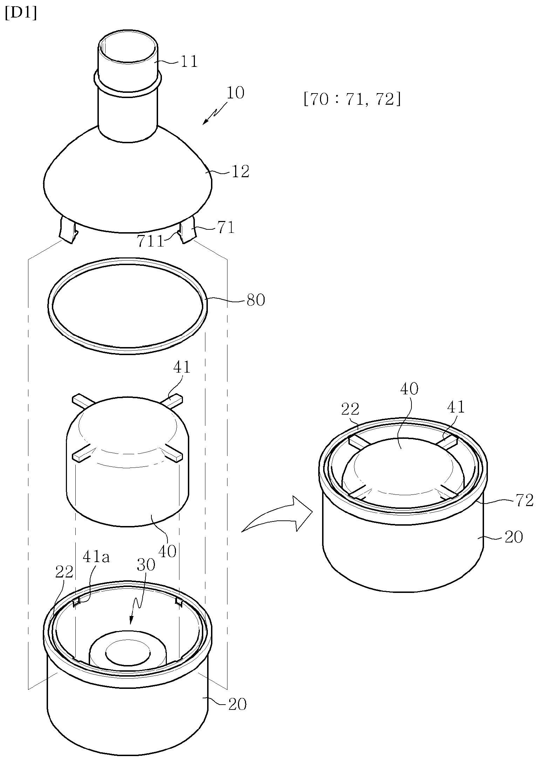

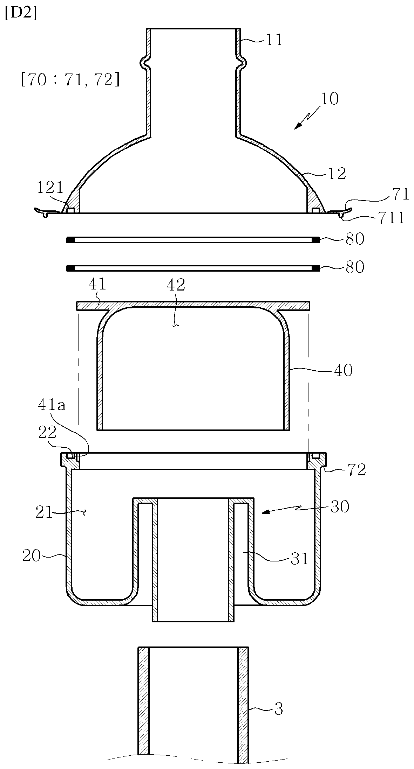

In FIG. 1, the upper portion or upward direction will refer to a top body or a side facing the same of a cover and the lower portion or downward direction will refer to a bottom body or a side facing the same of the cover. In FIG. 2, the outer portion or outward direction will refer to an outer chamber or a side facing the same and the inner portion or inward direction will refer to an inner chamber or a side facing the same.

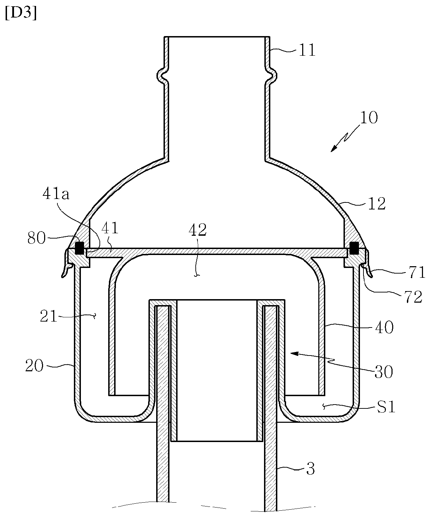

As illustrated in FIGS. 1 to 9, a structural drain trap for preventing spread of pathogens between floors according to an embodiment of the present invention includes a cover 10, an outer chamber 20, an inner chamber 30, a middle chamber 40, a sub-inner chamber 50, a sub-middle chamber 60, a holding means 70, and a watertight member 80.

In detail, as illustrated in FIGS. 1 to 4, the cover 10 includes a hollow cylindrical top body 11 connected to a drain pipe 2 of a drain hole 1, and a hollow hemispherical bottom body 12 extending downward around the lower end of the top body 11.

In this case, the top body 11 and the bottom body 12 have internal spaces connected integrally to each other, respectively. The top body 11 is connected to the drain pipe 2 of the drain hole 1. For this purpose, the top body 11 may have a spiral fastening part formed on the upper outer wall thereof to be fastened to the drain pipe 2 of the drain hole 1, or may be fastened to the drain pipe 2 using a separate coupler or the like.

The drain hole 1 is a hole formed in a sink, a washbasin, or the like. The drain pipe 2 is a pipe seated and installed in the drain hole 1, and may have a perforated mesh 2a seated on the upper portion thereof to filter out foreign substances with large particles (e.g., food).

As illustrated in FIGS. 1 to 4, the outer chamber 20 is disposed beneath the bottom body 12 of the cover 10, and has a cylindrical structure with an internal space 21 open upward. In this case, the space 21 has a circular shape when viewed from above while having a vertical linear shape when viewed from the side.

As illustrated in FIGS. 1 to 4, the inner chamber 30 has a hollow cylindrical structure in which it is disposed to pass through the bottom center area of the space 21 of the outer chamber 20. The inner chamber 30 has an upper inlet, which is disposed in the space 21 and is spaced along the inner wall of the space 21 to define a first annular interspace S1, and a lower outlet exposed to the outside.

Ultimately, the inner chamber 30 is disposed within the outer chamber 20 while being connected integrally to the outer chamber 20. The inner chamber 30 has a pipe fitting groove 31 provided at the lower end thereof so that the upper end of a final drain pipe 3 is fittable into the pipe fitting groove 31 (see FIG. 2).

The inner chamber 30 and the final drain pipe 3 may be connected by, for example, a spiral fastening part.

As illustrated in FIGS. 1 to 4, the middle chamber 40 has a lower end, which is disposed around the first interspace S1 to partition an upper-side first interspace S1 when the first interspace S1 is divided into upper and lower halves, and an upper end, which is disposed in the upper center area of the space 21 of the outer chamber 20 by two or more middle relay rods 41 connected to the upper end of the outer chamber 20. The middle chamber 40 has a cylindrical structure with an inner accommodation part 42 open downward.

In this case, each of the middle relay rods 41 is formed integrally with and protrudes from the upper end of the middle chamber 40 so that one end thereof is fittable into the fitting groove 41a provided at the inner upper end of the outer chamber 20.

The middle relay rods 41 are radially arranged with respect to the center of the middle chamber 40 when viewed from above, thereby allowing the water drained through the drain pipe 2 to pass through the passage formed between the respective middle relay rods 41.

Eventually, the water drained through the drain pipe 2 passes through the area between the outer chamber 20 and the middle chamber 40, is changed in direction by the lower end of the middle chamber 40 in the first interspace S1, and then overflows, so the water flows into the inner chamber 30 for drainage.

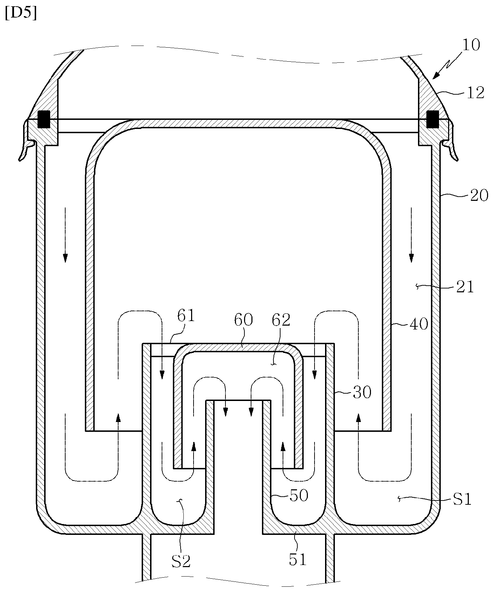

As illustrated in FIGS. 5 to 7, the sub-inner chamber 50 has a hollow cylindrical structure in which it is disposed to pass through the inner center area of the inner chamber 30. The sub-inner chamber 50 has an upper end, which is positioned lower than the upper end of the inner chamber 30 and is spaced along the inner wall of the inner chamber 30 to define a second annular interspace S2, and a lower end connected along the inner wall of the inner chamber 30 by a flange 51 connected to the inner chamber 30.

As illustrated in FIGS. 5 to 7, the sub-middle chamber 60 has a lower end, which is disposed around the second interspace S2 to partition an upper-side second interspace S2 when the second interspace S2 is divided into upper and lower halves, and an upper end, which is disposed in the inner center area of the inner chamber 30 by two or more sub-middle relay rods 61 connected to the inner chamber 30. The sub-middle chamber 60 has a cylindrical structure with an inner circulation part 62 open downward.

In this case, each of the sub-middle relay rods 61 has one end connected to the upper end of the inner chamber 30 and the other end connected to the upper end of the sub-middle chamber 60. The sub-middle relay rods 61 are radially arranged with respect to the center of the inner chamber 30 when viewed from above, thereby allowing the water overflowing from the accommodation part 42 of the middle chamber 40 to pass through the passage formed between the respective sub-middle relay rods 61.

Eventually, the water drained through the drain pipe 2 passes through the area between the outer chamber 20 and the middle chamber 40, is changed in direction by the lower end of the middle chamber 40 in the first interspace S1, and then overflows, so the water flows into the inner chamber 30. Then, the water passes through the area between the inner chamber 30 and the sub-middle chamber 60, is changed in direction by the lower end of the sub-middle chamber 60 in the second interspace S2, and then overflows, so the water flows into the sub-inner chamber 50 for drainage.

Accordingly, the water drained through the drain pipe 2 is filled to an appropriate height and is retained in the first and second interspaces S1 and S2 while flowing via the first and second interspaces S1 and S2. Therefore, it is possible to prevent pathogens as well as odors from flowing backward through the drain pipe 2.

As illustrated in FIGS. 1 to 5, the holding means 70 allows the cover 10 and the outer chamber 20 to be coupled to and decoupled from each other. The holding means 70 may include two or more holders 71 arranged at equal intervals around the lower end of the bottom body 12 of the cover while rotating vertically, each having a hook 711 at the end thereof, and a stepped part 72 formed around the upper outer wall of the outer chamber 20 so that the hook 711 of each holder 71 rotated downward is latched by the stepped part 72.

Eventually, each of the two or more tilted holders 71 is rotated downward to latch the hook 711 of the holder 71 by the stepped part 72, thereby allowing the cover 10 to be coupled to the outer chamber 20.

The holding means 70 may use various methods other than the illustrated method. Besides the hook 711 as described above, an L-shaped groove and a protrusion coupled to the groove may be used (the protrusion may be fastened to the groove by pressing the protrusion and then turning it slightly). Alternatively, a screwing means may be employed as the holding means 70.

As illustrated in FIGS. 1 to 3, the watertight member 80 has an annular structure in which it is disposed on the contact surface between the bottom body 12 of the cover 10 and the outer chamber 20. The bottom body 12 of the cover has an annular concave groove 121 recessed upward around the lower surface thereof, and the outer chamber 20 has an annular corresponding concave groove 121 recessed downward around the upper surface thereof so as to correspond to the concave groove 121. The watertight member 80 is mounted in both the concave groove 121 and the corresponding concave groove 22.

When the cover 10 and the outer chamber 20 are coupled to each other by the holding means 70, the watertight member 80 is pressed to have an expanded cross-sectional area. Ultimately, it is possible to prevent leakage by removing the gap between the cover 10 and the outer chamber 20.

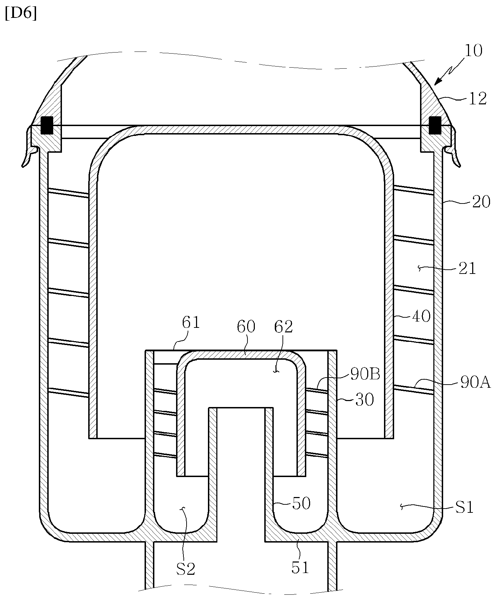

Meanwhile, the structural drain trap for preventing spread of pathogens between floors according to the embodiment of the present invention further includes an outer guide 90A and an inner guide 90B. As illustrated in FIG. 6, the outer guide 90A is disposed between the inner wall of the space 21 of the outer chamber 20 and the outer wall of the middle chamber 40, and has a spiral structure that creates a vortex.

As illustrated in FIG. 6, the inner guide 90B is disposed between the inner wall of the inner chamber 30 and the outer wall of the sub-middle chamber 60, and has a spiral structure that creates a vortex.

Eventually, the drained water meets the outer guide 90A to primarily swirl and then meets the inner guide 90B to secondarily swirl, thereby increasing the passage time of water compared to a linear flow. In addition, the outer guide 90A and the inner guide 90B may help to cause an efficient chemical reaction between water and sterilizing detergent during sterilization and washing through a sterilization washing module 200 to be described later.

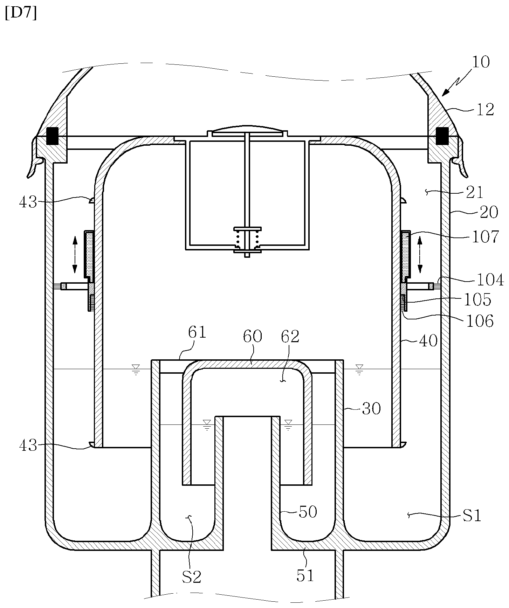

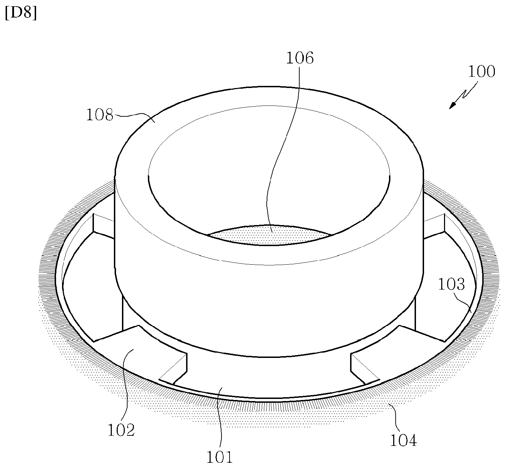

Meanwhile, the structural drain trap for preventing spread of pathogens between floors according to the embodiment of the present invention further includes a scrubber 100 and a sterilization washing module 200. As illustrated in FIGS. 7 and 8, the scrubber 100 includes a housing 101 fitted to the middle chamber 40 to surround the outer wall of the chamber 40, a plurality of joints 102 arranged at equal intervals around the outer peripheral surface of the housing 101, a circular ring 103 interconnecting the ends of the joints 102, an outer brush 104 provided along the outer peripheral surface of the circular ring 103 to abut on the inner wall of the space 21 of the outer chamber 20, a recess 105 recessed along the lower inner wall of the housing 101, an inner brush 106 provided along the recess 105 to abut on the outer wall of the middle chamber 40, an annular buoyancy element 107 disposed above the housing 101 to surround the outer wall of the middle chamber 40, and a fixing element 108 extending upward from the upper portion of the housing 101 to surround the buoyancy element 107.

Eventually, when the pressure of the water drained through the drain pipe 2 is applied to each of the joints 102, the outer and inner brushes 104 and 106 of the scrubber 100 may scrape a corresponding area of the drain trap to remove foreign substances or the like while the scrubber 100 move down. Of course, this may further help to cause an efficient chemical reaction between water and sterilizing detergent.

In addition, the scrubber 100, which is moved down, vibrates vertically through the interaction between the pressure of water and the buoyancy of the buoyancy element 107, and is stopped on the surface of water by the buoyancy element 107 when there is no flow of water.

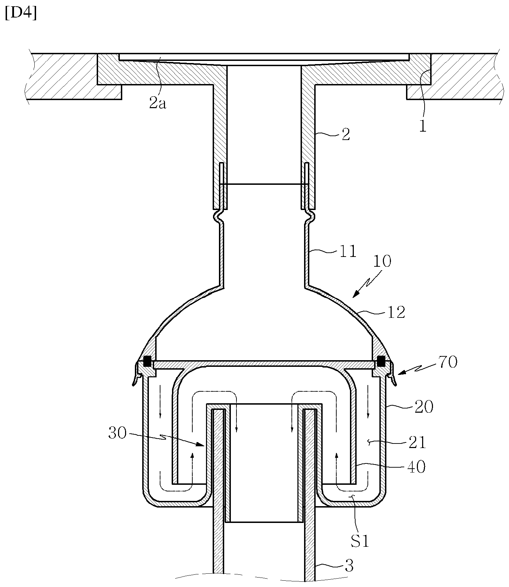

As illustrated in FIG. 4, the middle chamber 40 has annular stoppers 43 formed on the outer wall thereof to limit the vertical movement distance of the scrubber 100, so that the ascending scrubber 100 is latched and stopped by the upper stopper 43 and the descending scrubber 100 is latched and stopped by the lower stopper 43.

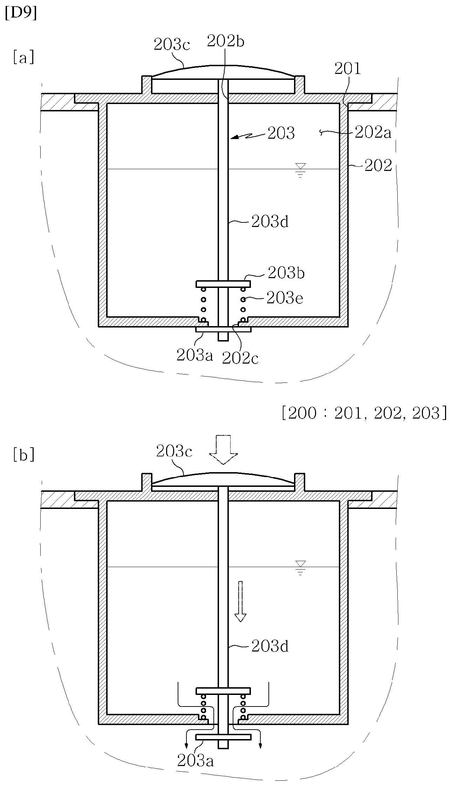

As illustrated in FIGS. 7 and 9, the sterilization washing module 200 includes a central hole 201 formed to penetrate vertically in the upper center area of the middle chamber 40, an enclosure 202 mounted in the central hole 201 and disposed in the accommodation part 42 of the middle chamber 40, the enclosure 202 having a storage space 202a to accommodate sterilizing detergent therein and an upper inlet 202b and a lower outlet 202c in communication with the storage space 202a, and a switching member 203, which has a switching head 203a disposed beneath the lower outlet 202c of the enclosure 202 to close the lower outlet 202c, a support 203b disposed above the switching head 203a and in the storage space 202a of the enclosure 202, a pushing head 203c disposed above the upper inlet 202b of the enclosure 202, an elevating rod 203d configured to pass through the upper inlet 202b while interconnecting the switching head 203a, the support 203b, and the pushing head 203c, and an elastic spring 203e fitted to the elevating rod 203d and interposed between the support 203b and the lower outlet 202c to exhibit an elastic force toward the support 203b.

Eventually, the pushing head 203c of the switching member 203 is pushed downward by the pressure of water drained thereinto and the switching head 203a is thus moved down together, so that the lower outlet 202c, which is closed by the switching head 203a, is opened and the sterilizing detergent accommodated in the storage space 202a is discharged and mixed with water.

In this case, when the flow of drained water is cut off or the pressure of water is weak, the pushing head 203c of the switching member 203 is lifted by the elastic restoring force of the elastic spring 203e and the switching head 203a is thus lifted together, thereby closing the lower outlet 202c by the switching head 203a.

Although not illustrated in the drawings, the enclosure 202 may be provided with a filling port, a filling hose, or the like for filling sterilizing detergent into the storage space 202a from the outside.

### [Mode for Invention]

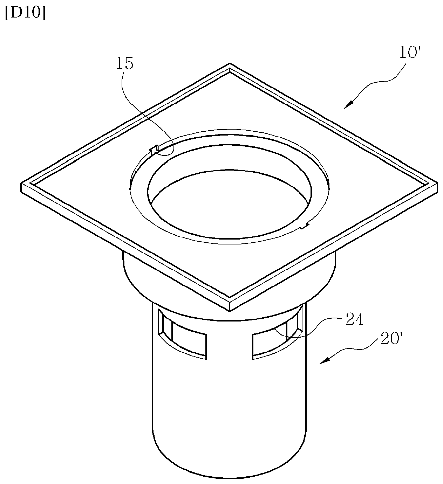

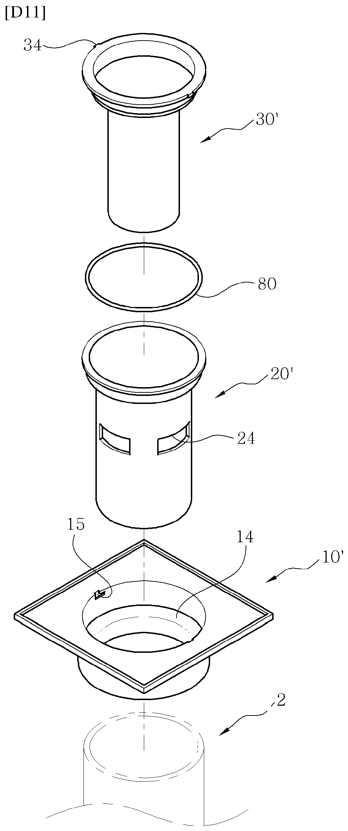

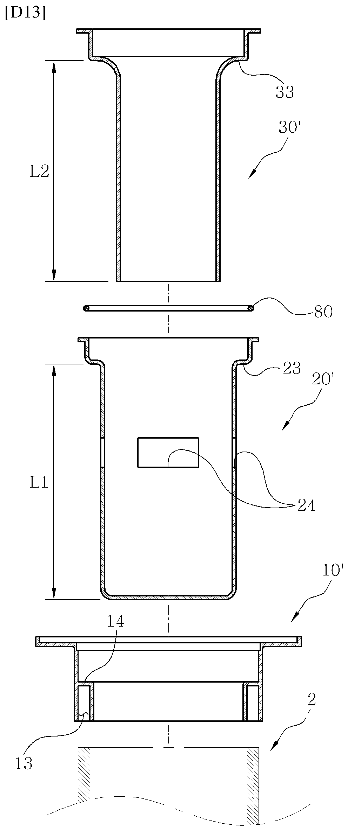

Hereinafter, another embodiment of the present invention will be described with reference to FIGS. 10 to 13. The present embodiment has the same operation and principle as those of the above-mentioned embodiment. However, in the present embodiment, water flows in an opposite direction.

A cover 10' is seated on the drain hole 1. The cylindrical cover 10' has a drain pipe fitting groove 13 formed on the lower end thereof so that the drain pipe 2 is fitted into the drain pipe fitting groove 13. The upper end of the cover 10' is provided with a chamber seating part 14 on which an outer chamber 20' and an inner chamber 30' are seated.

The outer chamber 20' is first seated on the chamber seating part 14, and the inner chamber 30' is seated thereon. The outer chamber 20' and the inner chamber 30' have seating bases 23 and 33 formed on the respective upper ends thereof to be bent outward.

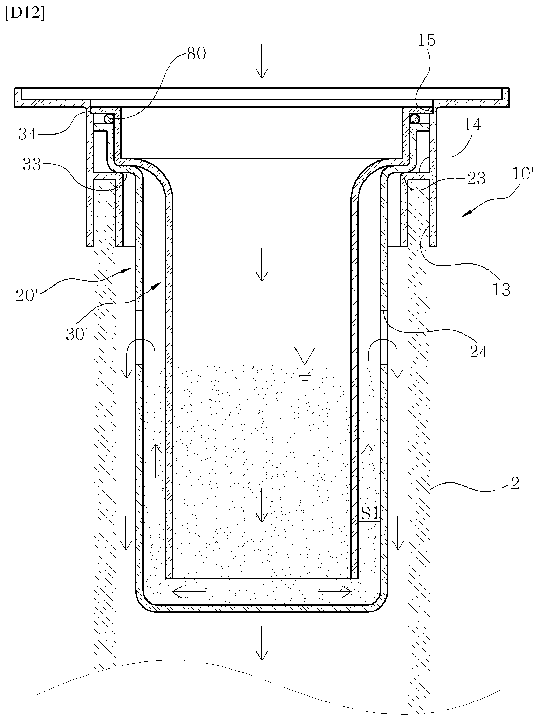

The outer chamber 20' and the inner chamber 30' are in the form of an open top and cylindrical container. However, the diameter of the former is larger than the diameter of the latter. The outer chamber 20' has a plurality of permeable holes 24 arranged circumferentially on the upper side thereof. The body length L1 of the outer chamber 20' is greater than the body length L2 of the inner chamber 30', so that the lower end of the inner chamber 30' is spaced apart from the bottom of the outer chamber 20' during installation as illustrated in FIG. 12.

Accordingly, the wastewater introduced into the center of the inner chamber 30' flows in the direction as indicated by the arrow in FIG. 12, and is discharged to the drain pipe 2 through the permeable holes 24.

Then, water is filled from the bottom of the outer chamber 20' to the permeable holes 24, whereby various viruses and bacteria, including odors, are not able to communicate vertically.

A watertight member 80 is interposed between the flanges of the outer chamber 20' and the inner chamber 30'.

The cover 10' has L-shaped fastening grooves 15 symmetrically provided on the upper inner wall thereof, and the inner chamber 30' has coupling protrusions 34 formed on the outside of the flange thereof to be coupled to the fastening grooves 15. As the coupling protrusions 34 are fitted into the fastening grooves 15, the inner chamber 30', the outer chamber 20', and the cover 10' are integrally coupled. The cover 10' may have a rectangular shape or a circular shape. The drain trap may be installed in a floor drain hole or a sink drain hole.

Meanwhile, the embodiment illustrated in FIGS. 6 to 9 may be applied to the present embodiment in the same manner. Since only the flow direction of water is changed in the present embodiment, it will be easily applied by those skilled in the art.

According to another feature of the present invention, an antibacterial or sterile material may be applied to the surfaces of the outer chamber 20 (20'), the inner chamber 30 (30'), and the middle chamber 40 that come into contact with water. The antibacterial or sterile material may be in the form of a film in recent years, and may be attached to all or some of the surfaces of the outer chamber 20 (20') and the inner chamber 30 (30') by coating or bonding. As the antibacterial material, copper foil or a film on which copper ions are sprayed may be used.

### [Industrial Applicability]

Although the structural drain trap for preventing spread of pathogens between floors according to the present invention has been described with reference to the accompanying drawings, it will be apparent to those skilled in the art that various variations and modifications may be made without departing from the spirit and scope of the invention as defined in the following claims and these variations and modifications fall within the scope of the invention. All the embodiments disclosed above may be used in various combinations. In particular, the embodiment illustrated in FIGS. 6 to 9 can be applied to both the embodiment illustrated in FIGS. 1 to 6 and the embodiment illustrated in FIGS. 10 to 13.

## Claims

1. A structural drain trap for preventing spread of pathogens between floors, comprising:
a cover (10) comprising a hollow cylindrical top body (11) connected to a drain pipe (2) of a drain hole (1), and a hollow hemispherical bottom body (12) extending downward around a lower end of the top body (11);
a cylindrical outer chamber (20) disposed beneath the bottom body (12) of the cover (10), and having an internal space (21) that is open upward;
a hollow cylindrical inner chamber (30) disposed to pass through a bottom center area of the space (21) of the outer chamber (20), the inner chamber (30) having an upper inlet, which is disposed in the space (21) and is spaced along an inner wall of the space (21) to define a first annular interspace (S1), and a lower outlet exposed to the outside;
a cylindrical middle chamber (40) having a lower end, which is disposed around the first interspace (S1) to partition an upper-side first interspace (S1) when the first interspace (S1) is divided into upper and lower halves, and an upper end, which is disposed in an upper center area of the space (21) of the outer chamber (20) by two or more middle relay rods (41) connected to an upper end of the outer chamber (20), the middle chamber (40) having an inner accommodation part (42) that is open downward;
a holding means (70) for allowing the cover (10) and the outer chamber (20) to be coupled to and decoupled from each other; and
an annular watertight member (80) disposed on a contact surface between the bottom body (12) of the cover (10) and the outer chamber (20).

2. The structural drain trap according to claim 1, further comprising:
a hollow cylindrical sub-inner chamber (50) disposed to pass through an inner center area of the inner chamber (30), the sub-inner chamber (50) having an upper end, which is positioned lower than an upper end of the inner chamber (30) and is spaced along an inner wall of the inner chamber (30) to define a second annular interspace (S2), and a lower end connected along the inner wall of the inner chamber (30) by a flange (51) connected to the inner chamber (30);
a cylindrical sub-middle chamber (60) having a lower end, which is disposed around the second interspace (S2) to partition an upper-side second interspace (S2) when the second interspace (S2) is divided into upper and lower halves, and an upper end, which is disposed in the inner center area of the inner chamber (30) by two or more sub-middle relay rods (61) connected to the inner chamber (30), the sub-middle chamber (60) having an inner circulation part (62) that is open downward;
a spiral outer guide (90A) disposed between the inner wall of the space (21) of the outer chamber (20) and an outer wall of the middle chamber (40) to create a vortex; and
a spiral inner guide (90B) disposed between the inner wall of the inner chamber (30) and an outer wall of the sub-middle chamber (60) to create a vortex.

3. The structural drain trap according to claim 1, further comprising a scrubber (100) comprising:
a housing (101) fitted to the middle chamber (40) to surround an outer wall of the chamber (40);
a plurality of joints (102) arranged at equal intervals around an outer peripheral surface of the housing (101);
a circular ring (103) interconnecting ends of the joints (102);
an outer brush (104) provided along an outer peripheral surface of the circular ring (103) to abut on the inner wall of the space (21) of the outer chamber (20);
a recess (105) recessed along a lower inner wall of the housing (101);
an inner brush (106) provided along the recess (105) to abut on the outer wall of the middle chamber (40);
an annular buoyancy element (107) disposed above the housing (101) to surround the outer wall of the middle chamber (40); and
a fixing element (108) extending upward from an upper portion of the housing (101) to surround the buoyancy element (107).

4. The structural drain trap according to claim 3, wherein the middle chamber (40) has an annular stopper (43) formed on the outer wall thereof to limit a vertical movement distance of the scrubber (100).

5. The structural drain trap according to any one of claims 1 to 4, further comprising a sterilization washing module (200) comprising:
a central hole (201) formed to penetrate vertically in an upper center area of the middle chamber (40);
an enclosure (202) mounted in the central hole (201) and disposed in the accommodation part (42) of the middle chamber (40), the enclosure (202) having a storage space (202a) to accommodate sterilizing detergent therein and an upper inlet (202b) and a lower outlet (202c) in communication with the storage space (202a); and
a switching member (203), which has a switching head (203a) disposed beneath the lower outlet (202c) of the enclosure (202) to close the lower outlet (202c), a support (203b) disposed above the switching head (203a) and in the storage space (202a) of the enclosure (202), a pushing head (203c) disposed above the upper inlet (202b) of the enclosure (202), an elevating rod (203d) configured to pass through the upper inlet (202b) while interconnecting the switching head (203a), the support (203b), and the pushing head (203c), and an elastic spring (203e) fitted to the elevating rod (203d) and interposed between the support (203b) and the lower outlet (202c) to exhibit an elastic force toward the support (203b).

6. A structural drain trap for preventing spread of pathogens between floors, comprising:
a cover (10') seated on a drain hole (1) and having a drain pipe fitting groove (13) formed on a lower end thereof so that a drain pipe (2) is fitted into the drain pipe fitting groove (13), an outer chamber (20') seated on the cover (10'), and an inner chamber (30') seated on the outer chamber (20'), wherein:
the outer chamber (20') and the inner chamber (30') are in the form of an open top and cylindrical container;
the outer chamber (20') has a larger diameter than the inner chamber (30');
the outer chamber (20') has a body length (L1) greater than a body length (L2) of the inner chamber (30');
the outer chamber (20') has a plurality of permeable holes (24) arranged circumferentially on its upper side;
wastewater introduced into the center of the inner chamber (30') is discharged to the drain pipe (2) through the permeable holes (24); and
water is filled from the bottom of the outer chamber (20') to the permeable holes (24), thereby preventing various viruses and bacteria, including odors, from communicating vertically.

7. The structural drain trap according to claim 6, wherein an antibacterial material is attached by coating or bonding to surfaces of the outer chamber (20') and the inner chamber (30') that come into contact with water.

8. The structural drain trap according to claim 1, wherein an antibacterial material is attached by coating or bonding to surfaces of the outer chamber (20), inner chamber (30), and the middle chamber (40) that come into contact with water.
